# FASCICULE DE BREVET EUROPEEN

(11) **EP 3 642 057 B1**
(45) Date de publication et mention de la délivrance du brevet: **07.09.2022**
(21) Numéro de dépôt: 18736990.5
(22) Date de dépôt: 04.06.2018
(51) Int. Cl.: B60C 23/06, B60T 8/172

(54) **DISPOSITIF D'EVALUATION DE LA DEFORMATION D'UNE ENVELOPPE PNEUMATIQUE**
SYSTEM ZUR AUSWERTUNG DER VERFORMUNG EINES REIFENMANTELS
SYSTEM OF EVALUATING OF THE DEFORMATION OF A TIRE TREAD

(30) Priorité: 23.06.2017 FR 1755767
(43) Date de publication de la demande: 29.04.2020
(73) Titulaire: Compagnie Générale des Etablissements Michelin, 63000 Clermont-Ferrand (FR)
(72) Inventeur: BEGOU, Pierre-Alain, 63040 Clermont-Ferrand Cedex 9 (FR); PATURLE, Antoine, 63040 Clermont-Ferrand Cedex 9 (FR); VACHERAND, Jean-Michel, 63040 Clermont-Ferrand Cedex 9 (FR); BOUHADIDA, Oussama, 63040 Clermont-Ferrand Cedex 9 (FR)
(74) Mandataire: Roussy, Delphine
(86) Numéro de dépôt international: PCT/FR2018/051282
(87) Numéro de publication internationale: WO 2018/234651

(56) Documents cités:
- WO-A1-2013/101064
- WO-A1-2015/073015

## Description

### Domaine de l'invention

La présente invention concerne un dispositif d'évaluation de la déformation d'une enveloppe pneumatique lorsque celle-ci comprise dans un ensemble monté roule sur un sol.

### Arrière-plan technologique

Il est primordial de s'intéresser à l'interaction entre l'enveloppe pneumatique et le sol. En effet, l'enveloppe pneumatique est le premier élément du véhicule en contact direct avec le sol. Il intervient de façon prépondérante dans les fonctions de guidage, de freinage et d'adhérence du véhicule. C'est un élément sécuritaire indiscutable du véhicule. Depuis de nombreuses années, des dispositifs électroniques nommés TPMS (acronyme en anglais de Tyre Pressure Monitoring System) ont été introduits au niveau de l'ensemble monté afin de détecter des variations des paramètres d'usage de l'ensemble monté pouvant engendrer un dysfonctionnement du véhicule tels que la pression de gonflage ou la température de la cavité fluide de l'ensemble monté compris entre l'enveloppe pneumatique et la jante de roue. Ces dernières années, des paramètres complémentaires ont été mis sous surveillance via de nouveaux dispositifs électroniques dits capteur TMS (Acronyme en anglais de Tyre Mounted Sensor). Ces nouveaux paramètres s'intéressent à la géométrie même de la zone de contact entre l'enveloppe pneumatique et le sol, l'objectif étant alors d'optimiser les systèmes sécuritaires du véhicule tels que les systèmes anti blocage des roues dits ABS (acronyme en allemand de Antiblockiersystem) ou des systèmes de stabilisation du véhicule ou stabilisateur ESP (acronyme en anglais de Electronic Stability Program).

La mesure, ou l'information utile, de ces capteurs résulte directement de la déformation que subit l'enveloppe pneumatique du fait de son contact avec le sol. En effet, l'enveloppe pneumatique initialement toroïdale va se déformer dans la zone de contact avec le sol appelée aire de contact lorsque le sol est rigide. L'information sur la déformation de l'enveloppe est un indicateur du niveau d'interaction entre l'enveloppe pneumatique et le sol.

Parmi les capteurs envisagés, EP3031632A2 emploie un détecteur de mouvement pour identifier indirectement les azimuts circonférentiels du pneumatique correspondant à l'entrée et la sortie de l'aire de contact. Ainsi une évaluation de la longueur de l'aire de contact est effectuée, construite à partir d'une mesure de l'angle entre deux points localisés et disjoints. D'autres capteurs comme les accéléromètres emploient la variation de l'accélération radiale comme indicateur de ce changement de géométrie. L'inconvénient principal de tels capteurs réside dans le caractère ponctuel de la mesure. Ainsi, si le capteur se trouve au droit ou à proximité d'une irrégularité de rigidité, qu'elle soit géométrique comme un nid de poule ou structurelle comme un caillou dans un sol meuble, la mesure effectuée se trouve entachée d'une erreur importante par rapport à une mesure continue. De même cette irrégularité peut se situer au niveau du sol ou au niveau de l'enveloppe pneumatique. En effet, le sommet de l'enveloppe pneumatique comprend une bande de roulement qui peut être constituée d'un enchainement de creux longitudinaux ou transversaux et de sculptures en saillie rendant fortement hétérogène la rigidité locale de l'enveloppe pneumatique en contact avec le sol. De plus ces systèmes ont un impact sur la rigidité locale de l'enveloppe pneumatique sur lequel ils sont montés perturbant ainsi la déformation vraie de l'enveloppe pneumatique. Enfin une mesure prenant en compte les hétérogénéités transversales de l'enveloppe pneumatique au niveau du sommet rendrait plus fiable le système de mesure. Les documents WO 2013/101064 A1 et WO2015/073015 A1 peuvent être cités comme art antérieur, divulguant respectivement des capteurs similaires dans des environnements similaires.

L'invention vise à proposer une solution technique permettant d'obtenir une mesure de la déformation de l'enveloppe pneumatique à l'échelle de l'aire de contact lors de son contact avec le sol.

### Définitions techniques

Dans ce qui suit, on entend par :
- « **direction axiale** », la direction d'avancement de l'enveloppe pneumatique dans le repère fixe,
- « **direction verticale** », la direction dans le repère fixe suivant la normale au sol,
- « **direction transversale** », la direction formant un trièdre direct avec les directions verticale et axiale,
- « **ensemble monté** », dispositif comprenant au moins une enveloppe pneumatique et une roue constituée d'un disque et d'une jante dans un état monté et gonflé,
- « **direction radiale** », la direction du repère tournant lié à l'enveloppe pneumatique s'éloignant de l'axe de rotation de l'enveloppe pneumatique,
- « **direction circonférentielle** », la direction du repère tournant formant un trièdre direct avec les directions transversale et radiale,
- **« plan médian de l'enveloppe pneumatique** » : plan fictif, perpendiculaire à l'axe de rotation de l'enveloppe pneumatique séparant cette dernière en deux parties équitablement réparties.

### Description de l'invention

L'invention porte premièrement sur un dispositif d'évaluation de la déformation d'une enveloppe pneumatique qui comprend :
- une enveloppe pneumatique ayant un axe de rotation, comprenant un sommet et deux flancs se terminant par deux zones d'accrochage, présentant une rigidité radiale;
- lorsque l'enveloppe pneumatique est comprise dans un ensemble monté en condition nominale d'usage, l'empreinte au sol de l'enveloppe pneumatique ayant une dimension L_{adc} selon la direction axiale et
- un dispositif électronique comportant un moins un capteur de flexion.

Le dispositif d'évaluation est caractérisé en ce que le capteur de flexion comprend une partie active présentant une dimension principale comprise entre 10% à 80% de la dimension L_{adc}. De plus le dispositif d'évaluation est caractérisé en ce que la partie active du capteur se situe au droit du sommet et en ce que la dimension principale de la partie active est orientée selon la direction circonférentielle de l'enveloppe pneumatique. Enfin le dispositif d'évaluation est caractérisé en ce que le au moins un capteur de flexion présente une rigidité de flexion plus souple que la rigidité radiale k_{radial} de l'enveloppe pneumatique.

On entend ici par le terme « rigidité radiale de l'enveloppe pneumatique », la rigidité de flexion de l'enveloppe pneumatique selon une sollicitation radiale du bloc sommet dans un état monté, gonflé sur une roue rigide.

On entend par le terme « condition nominale d'usage », les conditions de charge appliquée et de pression de gonflage selon la norme ETRTO en fonction des dimensions de l'enveloppe pneumatique. Sous ces conditions, avec une roue rigide sur un sol rigide et plan, l'enveloppe pneumatique décrit une surface de contact avec le sol en condition statique appelée aire de contact. La distance axiale maximale est nommée L_{adc} et la distance transversale maximale est nommée l_{adc}.

On entend ici par le terme « capteur de flexion » que le capteur délivre un signal proportionnel à la flexion moyenne appliquée suivant sa direction principale. Le fait que l'on définit une partie active de ce capteur de flexion ayant une certaine dimension, on évalue, à chaque mesure, la flexion moyenne de la partie active du capteur de flexion.

Ce type de dispositif répond à la problématique technique puisqu'il permet d'identifier le changement global de courbure qui se passera au niveau d'un secteur angulaire de l'enveloppe pneumatique entre les instants où ce secteur angulaire se situe entièrement dans l'aire de contact ou totalement en dehors de l'aire de contact. Ce dispositif cherche juste à identifier la flexion résultante d'une section angulaire correspondant à une longueur entre 10 et 80% de la L_{adc} de l'enveloppe pneumatique équipée du capteur entre un premier état en contact avec le sol et un second état en dehors du contact avec le sol. En effet, lors de la traversée de l'aire de contact, le capteur sera, par exemple, sur sol rigide comme une surface asphaltée, sous une forme plane qui est différente de la forme courbée lorsque le capteur est totalement hors de l'aire de contact. Enfin, le capteur est plus souple que la rigidité radiale de l'enveloppe pneumatique en condition d'usage. Ainsi, le capteur ne modifie pas trop la déformabilité de l'enveloppe pneumatique et par voie de conséquence la géométrie de l'aire de contact.

De façon préférentielle, le au moins un capteur de flexion est sensible pour des flexions comprises entre 0 et 60 degrés.

En raison de la dimension de la partie active du capteur de flexion et de la courbure conventionnelle d'une enveloppe pneumatique, une réponse précise du capteur est souhaitée pour des angles de courbure compris entre 0 et 60 degrés qui seront la gamme angulaire à mesurer en condition d'usage sur une enveloppe pneumatique.

Selon un mode de réalisation avantageux, dans lequel l'empreinte au sol de l'enveloppe pneumatique comprise dans un ensemble monté dans des conditions nominale d'usage présentant une dimension l_{adc} selon la direction transversale, le dispositif électronique présente une zone de mesure qui s'étend transversalement sur une distance comprise entre 10 et 80% de la dimension l_{adc} de l'aire de contact.

Ainsi, on évalue complètement la déformabilité de l'enveloppe pneumatique selon la direction axiale et prenant en compte la diversité selon la direction transversale. Cela permet d'une part de prendre en compte des irrégularités ponctuelles du sol sur une grande partie de la surface de l'aire de contact. Ainsi, une irrégularité de rigidité dans le sol, comme par exemple un caillou dans un sol meuble, sera moyennée sur le signal final. Cela améliore la qualité du signal du capteur en le rendant moins dépendant de ces irrégularités ponctuelles. De ce fait l'extension transversale de la zone de mesure du dispositif électronique permet de pallier ces difficultés. Cette extension peut se faire d'une part à l'aide d'un unique capteur ayant une surface bidimensionnelle ou d'autre part à l'aide de plusieurs capteurs linéiques positionnés transversalement les uns à côté des autres.

Préférentiellement la partie active du au moins un capteur de flexion se présentant sous une forme surfacique, la forme surfacique est comprise dans le groupe comprenant carré, rectangulaire, parallélogramme, oblongue, circulaire, ovale et elliptique.

Ces formes particulières permettent à la fois de disposer de capteur de forme linéique ou surfacique. De plus, ces formes permettent de s'adapter aux spécificités géométriques de la bande de roulement du sommet de l'enveloppe pneumatique.

Selon un mode de réalisation préférentielle, la partie active du au moins un capteur de flexion se situe au droit d'une zone du sommet de l'enveloppe pneumatique homogène en matière de rigidité radiale.

Afin d'améliorer la qualité des mesures de courbure, il est préférable que la partie active du capteur soit positionnée au droit d'une zone homogène de la bande de roulement. Ainsi, seules les informations en provenance de la nature du sol seront visibles par le capteur de flexion. La mesure est ainsi de meilleure qualité et l'exploitation est immédiate.

Selon un mode de réalisation très préférentielle, la partie active du au moins un capteur de flexion se situe au droit d'un élément de sculpture d'une bande de roulement du sommet de l'enveloppe pneumatique

Afin d'augmenter le rapport signal/bruit du capteur, il est préférable de positionner ce dernier au droit d'un élément de sculpture qui sera lui en contact direct avec le sol. Ainsi, la déformation de l'enveloppe pneumatique générée par le sol est maximale au droit de cet élément.

Préférentiellement, la partie active du au moins un capteur de flexion est centrée transversalement par rapport au sommet de l'enveloppe pneumatique.

De même afin d'optimiser le signal perçu par le capteur, il convient de le positionner selon la direction transversale au centre du sommet de l'enveloppe pneumatique. En effet, c'est à cet endroit que la déformation de l'enveloppe pneumatique est maximale en condition de roulage en ligne droite qui est la condition de roulage la plus probable.

Selon un autre mode de réalisation, le dispositif électronique est situé radialement intérieurement au sommet de l'enveloppe pneumatique.

Dans cette configuration au moins une partie du dispositif électronique est positionnée à l'intérieur de l'enveloppe pneumatique. De ce fait, la mise en place d'au moins une partie du dispositif peut se faire après la fabrication de l'enveloppe pneumatique ce qui rend l'opération moins délicate pour les composants du dispositif électronique. De plus, en cas d'incident sur le dispositif électronique, il est toujours possible d'intervenir sans détruire l'enveloppe pneumatique ce qui est appréciable. Enfin, lorsque l'enveloppe pneumatique sera en fin de vie, il sera aussi aisé de retirer le au moins une partie du dispositif électronique pour le réutiliser sur une autre enveloppe pneumatique.

Selon un autre mode de réalisation préférentielle, la partie active du au moins un capteur de flexion présente une surface externe en liaison avec la surface radialement intérieure du sommet de l'enveloppe pneumatique.

C'est un cas particulier où le capteur de flexion est situé en dehors de l'enveloppe pneumatique. Afin que le capteur donne une information la plus fiable possible de la déformation de l'enveloppe pneumatique, il est préférable que la partie active de ce capteur soit intimement liée à la surface intérieure du bloc sommet. Pour cela, des moyens standards d'adhésion spécifique à l'adhésion sur le caoutchouc seront employés et selon la nature de la surface externe de la partie active. Ainsi, le dispositif électronique complet est généralement situé en dehors de la structure de l'enveloppe pneumatique permettant de réaliser sa mise en place complète après la fabrication de l'enveloppe pneumatique.

Selon un mode de réalisation préférentielle, le au moins un capteur de flexion est un capteur passif et résistif.

Ce type de capteur permet d'obtenir la courbure moyenne de l'enveloppe pneumatique sur un secteur angulaire conséquent de façon plutôt linéique bien qu'il soit possible de multiplier les capteurs pour couvrir transversalement l'aire de contact. La déformation de l'enveloppe pneumatique engendre la flexion du capteur ce qui entraine une variation de la résistance du capteur. Cette variation de l'impédance du capteur est proportionnelle au niveau de flexion de l'enveloppe pneumatique.

Selon un autre mode de réalisation préférentielle le au moins un capteur de flexion est un capteur actif et piézoélectrique.

C'est un autre type de capteur qui est sensible à la flexion de l'enveloppe pneumatique qui est bien adapté pour des parties actives de forme surfacique. Le signal émis par le capteur, dans ce cas une variation de charge, est proportionnel à la courbure de la partie active du capteur.

Selon un mode de réalisation particulier, le dispositif électronique comprend au moins un capteur de mesure des paramètres de l'ensemble monté compris dans le groupe comprenant capteur de température, capteur de pression et accéléromètre.

Il est tout à fait possible de coupler le capteur de flexion avec d'autres capteurs de mesure. En particulier des capteurs similaires aux dispositifs électroniques de surveillance des paramètres de l'aire de contact comme un capteur de température ou un capteur de pression. Ces mesures des paramètres d'usage d'un ensemble monté couplées à la mesure de déformation de l'enveloppe pneumatique permettent d'accéder à des informations complémentaires de l'ensemble monté afin de détecter une crevaison ou une surcharge appliquée à l'ensemble monté. Enfin, le positionnement du dispositif électronique sur le bloc sommet est un lieu privilégié pour associer le dispositif électronique à des capteurs accélérométriques.

Selon un autre mode de réalisation particulier, le dispositif électronique comprend au moins un dispositif émetteur radiofréquence.

Si le dispositif électronique a pour objectif initial de mesurer la déformation de l'enveloppe pneumatique, il faut aussi transmettre cette information vers d'autres dispositifs sécuritaires de l'ensemble monté. Ces dispositifs sécuritaires se situent soit dans l'ensemble monté tels que les TPMS ou TMS ou soit sur le véhicule. Par conséquent ce dispositif émetteur radiofréquence comprend un module récepteur et son antenne adaptée qui fonctionnent sur les fréquences radiofréquences libres de type UHF (acronyme d'Ultra Hautes Fréquences) pour la transmission des données et BF (acronyme de Basses Fréquences) pour le réveil des dispositifs sécuritaires.

Selon un second mode de réalisation particulier, le dispositif électronique comprend au moins un dispositif récepteur radiofréquence.

Une autre configuration est celle ou le dispositif électronique est équipé d'un dispositif récepteur radiofréquence. Dans ce cas, le dispositif électronique reçoit des informations complémentaires soit de la part des dispositifs sécuritaires de type TPMS ou TMS soit de dispositifs interrogateurs provenant du véhicule ou des passagers pour effectuer une tâche comme le réveil du dispositif électronique, le stockage de mesures ou la transmission d'un bloc de mesures.

### Description brève des dessins

L'invention sera mieux comprise à la lecture de la description qui va suivre donnée uniquement à titre d'exemple et faite en se référant aux figures annexées dans lesquelles les mêmes numéros de référence désignent partout des parties identiques et dans lesquelles :
- La figure 1 présente une vue en coupe radiale et en perspective d'une enveloppe pneumatique faisant partie du dispositif d'évaluation de la déformation d'une enveloppe pneumatique.
- Les figures 2a, 2b, 2c représentent des vues en coupe méridienne de dispositif d'évaluation d'une enveloppe pneumatique dont l'implantation du dispositif électronique évolue radialement.
- Les figures 3a, 3b et 3c présentent des vues en coupe radiale d'un dispositif d'évaluation de la déformation d'une enveloppe pneumatique dont l'implantation du dispositif électronique évolue transversalement.
- La figure 4 présente une vue en perspective d'un dispositif d'évaluation de la déformation d'une enveloppe pneumatique comprenant un capteur de flexion de type piézoélectrique.
- La figure 5 montre la réponse de capteurs de flexion suivant diverses positions d'implantation et selon des niveaux de déformabilité différente de l'enveloppe pneumatique.

### Description détaillée de modes de réalisation

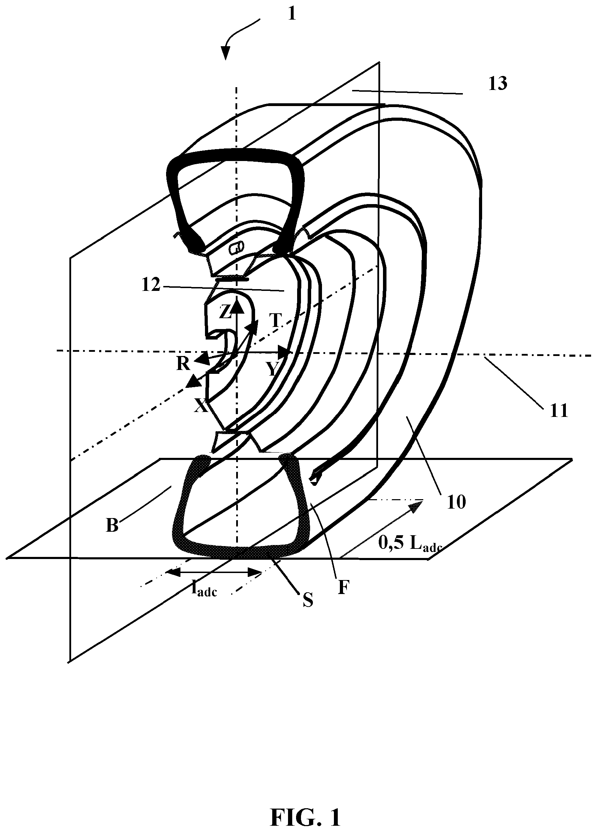

Sur la figure 1, on distingue un dispositif d'évaluation 1 de la déformation d'une enveloppe pneumatique comprenant une enveloppe pneumatique 10 et une roue 12. Il comprend aussi un dispositif électronique situé à l'intérieur de l'enveloppe pneumatique 10 non représenté sur cette figure. L'ensemble monté est équipé d'un premier repère fixe. L'origine du repère est le centre de l'enveloppe pneumatique 10 défini par l'intersection de l'axe de rotation 11 de l'enveloppe pneumatique 10 et du plan médian 13 de l'enveloppe pneumatique 10. L'axe axial nommé X est suivant la direction de déplacement de l'enveloppe pneumatique 10 au sol en condition de roulage en ligne droite. L'axe vertical nommé Z est suivant la normale au sol. Enfin l'axe transversal Y est dirigé suivant l'axe de rotation 11 de l'enveloppe pneumatique 10 en condition de roulage en ligne droite. Le second repère associé à l'enveloppe pneumatique 10 est un repère tournant. L'origine du repère et l'axe transversal Y sont identiques à ceux du repère fixe. Mais il est pourvu d'un axe radial nommé R s'éloignant radialement de l'axe de rotation 11 et d'un axe circonférentiel nommé T formant un trièdre direct avec l'axe transversal Y et l'axe radial R.

L'enveloppe pneumatique 10 de type tourisme et camionnette, de dimension 205/55R16 91 V à titre d'exemple, comprend un sommet nommé S se poursuivant par deux flancs latéraux nommés F se terminant par des zones d'accrochage nommées B sur la jante de la roue 12. Cette enveloppe pneumatique de type lisse est en condition montée sur roue en tôle 12, de dimension 6.5J16 et d'écuanteur 20 millimètres. L'ensemble monté est gonflé à la pression nominale d'usage de 2.1 bars. Il est soumis à une charge nominale de 400 kilogrammes sur un sol plan et rigide. L'empreinte au sol de l'enveloppe pneumatique 10 définit une aire de contact. Cet aire de contact est inscrite dans un rectangle dont les côtés sont respectivement parallèles deux à deux à l'axe axial X et l'axe transversal Y. La dimension suivant la direction X définit la longueur de l'aire de contact nommée L_{adc}. La dimension suivant la direction Y définit la largeur de cette aire de contact nommée l_{adc}.

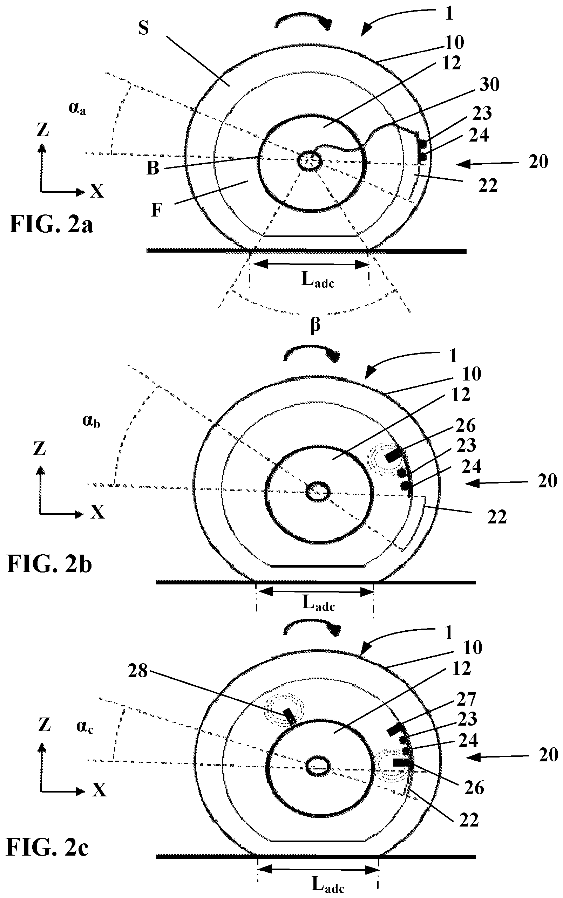

Les figures 2a, 2b 2c sont des vues en coupe méridienne d'une enveloppe pneumatique 10 montée sur une roue 12. On distingue sur chaque vue un exemple d'implantation non limitatif d'un dispositif électronique 20 dans un dispositif d'évaluation 1 de la déformation de l'enveloppe pneumatique.

Sur la figure 2a, le dispositif électronique 20 comprend un capteur de flexion représenté par sa partie active 22, un module de contrôle 23 et une batterie 24 connectés galvaniquement entre eux à l'aide d'une carte électronique Une liaison filaire 30 entre le module de contrôle 23 et un dispositif externe situé en dehors de l'ensemble monté qui passe par un collecteur tournant. Cette liaison filaire 30 transmet les mesures en direct au dispositif externe. Dans cette configuration, le dispositif électronique 20 est enfoui à l'intérieur du sommet S de l'enveloppe pneumatique 10 où seules les connexions filaires 30 vers le dispositif externe sont situées en dehors de l'enveloppe pneumatique 10.

Sur la figure 2b, le dispositif électronique 20 comprend les mêmes éléments que sur la figure 2a. Cependant, un dispositif émetteur radiofréquence 26 est connecté galvaniquement au module de contrôle 23. Ainsi la transmission des données entre le dispositif électronique 20 et le dispositif externe se fait via une communication radiofréquence dans la gamme des UHF et tout particulièrement sur les fréquences d'émission libres suivantes 433 Mhz, 860 Mhz ou 920 Mhz. De plus, le dispositif électronique 20 comprend ici un capteur de mesure des paramètres de l'ensemble monté de type capteur de pression non représenté sur la figure 2b. Ce dernier est connecté galvaniquement au module de contrôle 23 via la carte électronique. Dans cette configuration, la partie active 22 du capteur de flexion est située à l'intérieur du bloc sommet S. Mais, la partie non active du capteur de flexion, le module de contrôle 23, la batterie 24, le capteur de mesure des paramètres de l'ensemble monté et le dispositif émetteur radiofréquence 26 sont fixés sur la surface intérieure du sommet S. Ainsi la partie active 21 est protégée à l'intérieur de l'enveloppe pneumatique 10 tandis que les autres composants peuvent être facilement échangés au cours de la durée de vie du dispositif d'évaluation 1.

Dans la figure 2c, le dispositif électronique 20 ne comprend pas de capteur de mesure des paramètres de l'ensemble monté connecté galvaniquement au module de contrôle. En revanche, l'ensemble monté est équipé d'un dispositif sécuritaire de type TMS ou TPMS ayant ce type de capteur 28. Et, le dispositif électronique 20 comprend un dispositif récepteur radiofréquence 27. Le module de réception radiofréquence 27 est alors adapté pour écouter les signaux émis par le dispositif sécuritaire afin de récupérer l'information sur les paramètres de l'ensemble monté issus du capteur 28. Le dispositif électronique 20 transmet alors par voie radiofréquence les informations du capteur de flexion et du capteur de mesure des paramètres de l'ensemble monté 28 vers un dispositif externe à l'ensemble monté.

Dans une autre configuration, non représentée ici, le dispositif électronique 20 comprend l'ensemble des éléments du dispositif électronique 20 de la figure 2b. De plus, un module de réception radiofréquence 27 est connecté galvaniquament au module de contrôle 23. Ainsi, le module récepteur radio fréquence 27 a pour rôle dans cette configuration d'activer le dispositif électronique 20 sur un ordre émanant du conducteur ou du véhicule transmis par radiocommunication sur la fréquence de 125 kHz. En l'abscncc de cet ordre, le dispositif électronique 20 est en veille permettant d'économiser la batterie 24. Lorsque le dispositif électronique 20 est activé, il lance l'acquisition des données sur une période de temps pré déterminée correspondant à plusieurs tours de roue.

Dans l'ensemble des figures 2a, 2b et 2c, on notera que la partie active 22 du capteur de flexion couvre des secteurs angulaires αₐ, α_{b} et α_{c} qui représentent respectivement 20%, 50% et 10% de la longueur L_{adc} de l'aire de contact délimitée par le secteur angulaire β. On remarquera que les autres composants du dispositif électronique 20 ne sont pas nécessairement situés au droit de la partie active 22 du capteur de flexion. En effet ils sont positionnés dans un secteur angulaire dans le repère tournant situés en retard par rapport au sens d'avancement de l'enveloppe pneumatique 10. Ainsi ces composants modifient peu la rigidité radiale de l'enveloppe pneumatique 10 au droit de la partie active 22 du capteur de flexion.

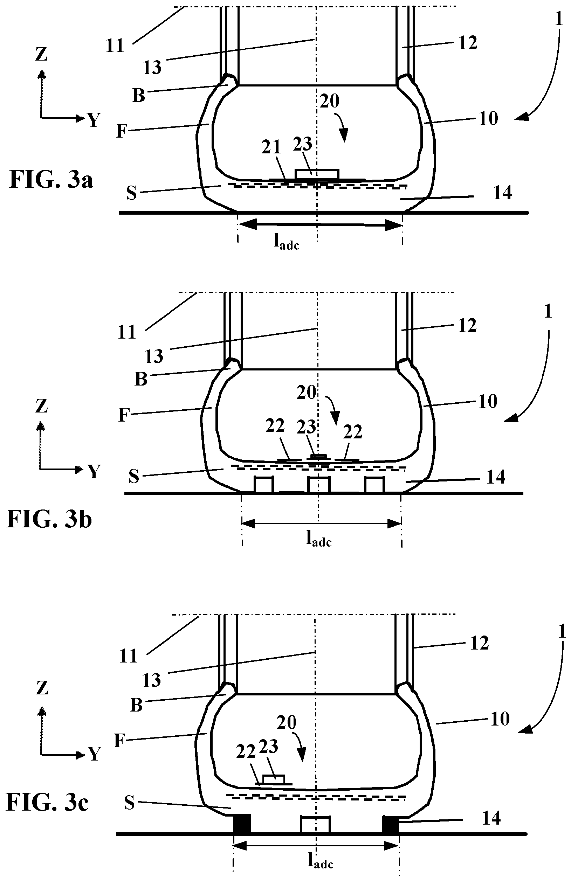

Les figures 3a, 3b et 3c présentent diverses implantations transversales non limitatives du dispositif électronique 20 dans un dispositif d'évaluation 1 de la déformation de l'enveloppe pneumatique. Dans ces figures, le dispositif électronique 20 du dispositif d'évaluation 1 est positionné en dehors de la structure de l'enveloppe penumatique 10 et radialement intérieurement à l'enveloppe pneumatique 10 montée sur une roue 12 et présentant un axe de rotation 11 et plan médian 13. La bande de roulement 14 du sommet S de l'enveloppe pneumatique 10 définissant en condition nominale d'usage une aire de contact caractérisée en autre par la largeur l_{adc}.

La figure 3a présente un dispositif d'évaluation 1 dans le cas d'une enveloppe pneumatique 10 ne présentant pas de creux ou d'éléments en saillie sur la bande de roulement 14 du sommet S, l'enveloppe pneumatique 10 est lisse. Dans ce cas précis, la partie active du capteur de flexion 21 du dispositif électronique 20 est centrée transversalement par rapport à la largeur du sommet S bien qu'un décalage transversale serait possible sans modifier fortement la réponse du capteur de flexion 21. De plus, la largeur de la partie active du capteur 21 représente 60% de la dimension de la largeur l_{adc} de l'aire de contact permettant de moyenner la réponse de l'enveloppe pneumatique 10.

La figure 3b présente une enveloppe pneumatique 10 de type nervurée présentant 3 sillons 16a, 16b et 16c circonférentielles équidistants des uns des autres. Le sillon central 16b est centré sur la largeur du sommet S. Dans ce cas, la partie active 22 des capteurs de flexion se situe au droit d'une nervure circonférentielle qui est une zone homogène en matière de rigidité radiale. La largeur de la nervure étant faible, le dispositif électronique 20 comprend ici deux capteurs de flexion linéiques, c'est à-dire étroit transversalement, situés au droit des nervures centrales. La zone de mesure du dispositif électronique 20 s'étend transversalement sur 40% de la largeur l_{adc} de l'aire de contact par l'intermédiaire de deux zones de mesures s'étendant individuellement sur 10% de la dimension l_{adc}. Dans ce cas précis, les autres composants du dispositif électronique 20 sont situés entre les parties actives 22 de chaque capteur de flexion. C'est en effet une zone ayant peu d'intérêt pour la mesure puisqu'elle ne subit pas directement la rigidité du sol sur lequel l'ensemble monté roule.

La figure 3c est une configuration où la bande de roulement 14 du sommet S de l'enveloppe pneumatique 10 présente de larges sculptures représentant chacune environ 30% de la dimension l_{adc} en forme de banane partant du centre de la largeur l_{adc} du sommet S et s'étendant transversalement selon une direction de 45 degrés par rapport à l'axe X. L'association d'une sculpture de type banane s'éloignant dans le sens transversal positif et d'une autre s'éloignant dans le sens transversal négatif forme un chevron. L'enveloppe pneumatique comprend ici 20 chevrons équitablement répartis au tour de roue. La partie active 22 du capteur de flexion est positionnée au droit d'une de ces sculptures sur une largeur de 15% de la dimension l_{adc}. De plus la position transversale de ce capteur de flexion est centrée par rapport à la dimension transversale de la sculpture banane. Dans cette coupe radiale, la zone grise représente la partie transversalement extérieure de la sculpture banane.

Ainsi dans les figures 3a, 3b et 3c, la partie active 22 du capteur de flexion se trouve positionnée au droit d'une zone homogène en matière de rigidité radiale de l'enveloppe pneumatique 10.

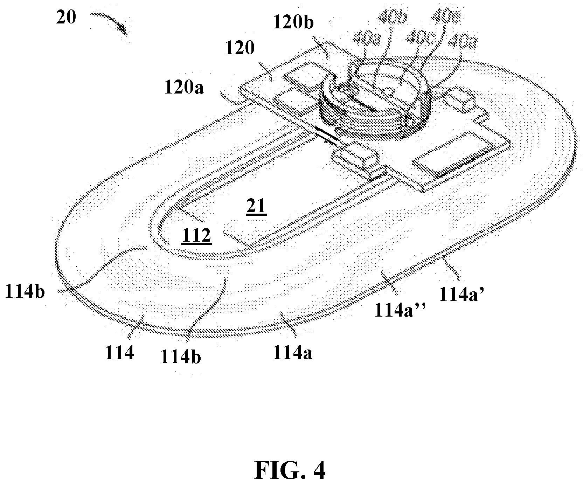

La figure 4 est une vue en perspective d'un dispositif électronique 20 comprenant un capteur de flexion de type piézoélectrique 21 apte à être installé sur la surface interne d'une enveloppe pneumatique. Ce dispositif électronique 20 comprend un patch de retenue 114 en matière élastomère ayant comme première fonctionnalité de retenir le capteur de flexion piézoélectrique 21. L'autre fonctionnalité de ce patch 114 est de fixer le dispositif électronique 20 sur la surface interne d'une enveloppe pneumatique Pour cc faire, le patch présente une surface fermée inférieure 114a' de connexion avec l'enveloppe pneumatique. Des moyens d'adhésion chimiques bien connus de l'homme du métier sont alors employés pour fixer cette surface 114a' avec l'enveloppe pneumatique. Ces moyens sont chimiquement compatibles avec les élastomères à la fois de l'enveloppe pneumatique et du patch 114.

La surface supérieure 114a" du patch de retenue 114 présente une structure annulaire effilée 114a en se rapprochant des extrémités du patch 114 et une structure annulaire bombée 114b en connexion avec la structure effilée 114a vers le centre du patch 114. Cette structure bombée 114b forme avec la surface inférieure 114a' une fente apte à accueillir et retenir le capteur de flexion 21 par l'intermédiaire d'une pièce intermédiaire 112.

L'élément piézoélectrique 21 est ici intégré à la pièce intermédiaire 112 à ses extrémités. L'élément intermédiaire 112 est lui rigidement solidaire du patch 114 La partie active de l'élément piézoélectrique 21 délivre un signal électrique qui peut être analysé et qui est proportionnel à la flexion du patch 114. Un circuit imprimé 120 comprenant divers composants sur sa face supérieure 120b tels qu'un module de contrôle, un capteur de mesure de la pression, est monté sur la pièce intermédiaire 112. Le circuit imprimé 120 comprend en autre un socle 40 apte à accueillir une batterie rechargeable. La recharge de cette batterie est réalisée à l'aide d'un second élément piézoélectrique non représenté sur cette figure.

L'élément piézoélectrique 21 est constitué d'une structure sandwich comprenant une couche piézoélectrique entre deux couches conductrices. La matériau de la couche piézoélectrique comprend au moins un élément du groupe comprenant berlinite, quartz, topaz, ivoire, gallium, titanate, titanate de zirconate, niobate de potassium, niobate de lithium, niobate de sodium, tantalite de lithium et fluoride de polyvinylidiène ( PVDF). Les couches conductrices sont constituées par des matériaux conducteurs de type cuivre, or, argent aluminium ou équivalent.

Bien entendu d'autres types de capteur de flexion peuvent être employés en particulier des capteurs résitifs dont l'impédance est proportionnelle à la flexion de la partie active du capteur. Ce type de capteurs ont des longueurs de partie active différentes et des sensibilités évoluant selon la dimension. Des capteurs de la marque Spectrasymbol dont les références sont FS-L-0095-103-ST ou FS-L-0055-253-ST sont tout à fait adaptés à ce type de dispositif.

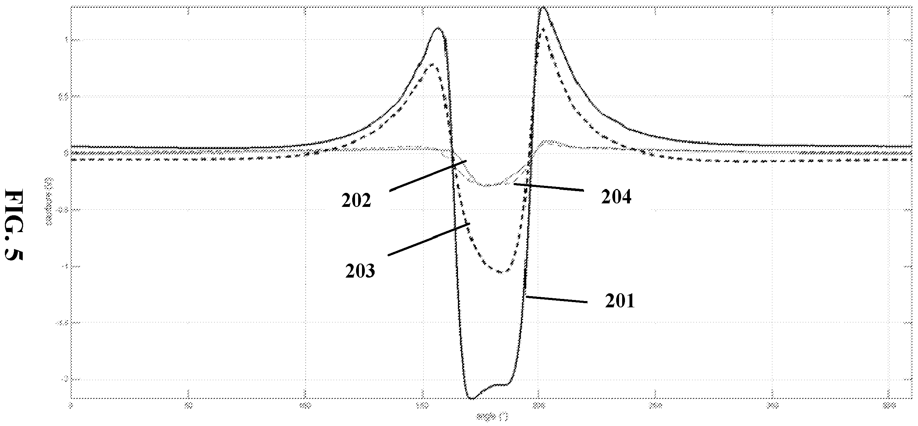

La figure 5 comporte les réponses de capteurs de flexion de type piézoélectrique lorsque ceux-ci sont installés sur une enveloppe pneumatique de marque Michelin Multibib en dimension 650/60 R38 lors de roulage sur un tracteur Fendt Turbomatik Favorit 614 LSA. Cette enveloppe pneumatique présente deux séries de barrettes positionnées sur les parties latérales de la bande de roulement en décalage angulaire l'une par rapport à l'autre. En effet, chaque barrette part du centre du sommet et s'étend dans une direction de 30 degrés vers l'extérieur.

Un premier capteur de flexion est positionné sur la gomme intérieure de l'enveloppe pneumatique en ayant la partie active du capteur fixée au droit d'une barrette. Afin d'optimiser la réponse du signal, ce capteur de flexion est situé le plus au centre possible de la bande de roulement. Un second capteur de flexion est positionné au droit d'une zone inter barrette. Ce capteur est aussi centré au mieux par rapport à la largeur du sommet.

Ces dispositifs d'évaluation de la déformation de l'enveloppe pneumatique vont rouler sur deux sols de rigidité différente. Le premier sol est une route bituminée de rigidité élevée. Le second sol est un champ agricole sans culture et sans labourage depuis quelques temps. Ainsi la déformation subie par l'enveloppe pneumatique entre les deux zones est différente, et on attend que le capteur de flexion puisse restituer ces phénomènes.

L'ensemble monté est gonflé à la pression de 1,6 bar et le tracteur roule à une vitesse constante de 10 km/h aussi bien sur la route que dans le champ.

Les courbes 201 et 203 en gras représentent la réponse du premier capteur de flexion dont la partie active se trouve au droit d'une barrette de la bande de roulement. Les courbes 202 et 204 en trait fin sont les réponses du second capteur de flexion situé dans la zone inter barrette. Les courbes 201 et 202 en trait continu correspondent au roulage sur la route, tandis que les courbes 203 et 204 en pointillé correspondent au roulage dans le champ.

Les signaux observés sont la moyenne sur 10 tours de roue des sorties brutes du capteur de flexion en volts sur un tour de roue complet, c'est donc un mesure indirecte de la flexion du capteur puisque la réponse observée du capteur piézoélectrique est ici une tension, proportionelle à la variation de flexion et non directement la flexion absolue du capteur. L'origine des angles est située suivant la direction verticale, selon les Z positifs dans le repère fixe. La forte évolution située aux alentours de 180 degrés correspond à la réponse du capteur dans l'aire de contact.

On observe assez nettement que la réponse du premier capteur de flexion est correcte par rapport à ce que l'on attend. On visualise en outre une forte évolution de sa réponse qui est proportionnelle à la rigidité du sol et donc à la déformation de l'enveloppe pneumatique. En revanche, la réponse du second capteur n'est pas suffisamment discriminante. Tout d'abord l'amplitude de la réponse du second capteur de flexion est nettement plus faible que celle du premier capteur. De plus, la réponse du second capteur est quasi similaire et ce quelle que soit la nature du sol. De ce fait, il s'avère bien que le positionnement du capteur au droit d'un élément de sculpture en contact avec le sol soit préférable pour un fonctionnement optimal du dispositif d'évaluation de la déformation de l'enveloppe pneumatique. Cependant, les deux capteurs donnent des informations fiables concernant la géométrie de l'aire de contact qui est aussi un critère important et essentiel dans l'évaluation de la déformation de l'enveloppe pneumatique.

## Revendications

1. Dispositif d'évaluation (1) de la déformation d'une enveloppe pneumatique comprenant :
- une enveloppe pneumatique (10) ayant un axe de rotation (11), comprenant un sommet (S) et deux flancs (F) se terminant par deux zones d'accrochage (B), présentant une rigidité radiale k_{radial} ;
- lorsque ladite enveloppe pneumatique (10) est comprise dans un ensemble monté en condition nominale d'usage, l'empreinte au sol de ladite enveloppe pneumatique (10) ayant une dimension L_{adc} selon la direction axiale ;
- un dispositif électronique (20) comportant un moins un capteur de flexion (21) ;
en ce que le au moins un capteur de flexion (21) comprend une partie active (22) présentant une dimension principale comprise entre 10% à 80% de la dimension L_{adc}, en ce que la partie active (22) du capteur se situe au droit du sommet (S), en ce que la dimension principale de la partie active (22) est orientée selon la direction circonférentielle de l'enveloppe pneumatique (10) et **caractérisé en ce que** le au moins un capteur de flexion (21) présente une rigidité de flexion plus souple que la rigidité radiale k_{radial} de l'enveloppe pneumatique (10).

2. Dispositif d'évaluation (1) de la déformation d'une enveloppe pneumatique selon la revendication 1, dans lequel le au moins un capteur de flexion (21) est sensible pour des flexions comprises entre 0 et 60 degrés.

3. Dispositif d'évaluation (1) de la déformation d'une enveloppe pneumatique selon l'une des revendications précédentes dans lequel, l'empreinte au sol de ladite enveloppe pneumatique (10) comprise dans un ensemble monté dans des conditions nominale d'usage présentant une dimension l_{adc} selon la direction transversale, le dispositif électronique (20) présente une zone de mesure qui s'étend transversalement sur une distance comprise entre 10 et 80% de la dimension l_{adc}.

4. Dispositif d'évaluation (1) de la déformation d'une enveloppe pneumatique selon l'une des revendications précédentes dans lequel, la partie active (22) du au moins un capteur de flexion (21) se présentant sous une forme surfacique, ladite forme surfacique est comprise dans le groupe comprenant carré, rectangulaire, parallélogramme, oblongue, circulaire, ovale et elliptique.

5. Dispositif d'évaluation (1) de la déformation d'une enveloppe pneumatique selon l'une des revendications précédentes dans lequel, la partie active (22) du au moins un capteur de flexion (21) se situe au droit d'une zone du sommet (S) de l'enveloppe pneumatique (10) homogène en matière de rigidité radiale.

6. Dispositif d'évaluation (1) de la déformation d'une enveloppe pneumatique selon l'une des revendications précédentes dans lequel, la partie active (22) du au moins un capteur de flexion (1) se situe au droit d'un élément de sculpture d'une bande de roulement (14) du sommet (S) de l'enveloppe pneumatique (10).

7. Dispositif d'évaluation (1) de la déformation d'une enveloppe pneumatique monté selon l'une des revendications précédentes dans lequel, la partie active (22) du au moins un capteur de flexion (21) est centrée transversalement par rapport au sommet (S) de l'enveloppe pneumatique (10).

8. Dispositif d'évaluation (1) de la déformation d'une enveloppe pneumatique selon l'une des revendications précédentes dans lequel, au moins une partie du dispositif électronique (20) est situé radialement intérieurement au sommet (S) de l'enveloppe pneumatique (10).

9. Dispositif d'évaluation (1) de la déformation d'une enveloppe pneumatique selon l'une des revendications précédentes dans lequel, la partie active (22) du au moins un capteur de flexion (21) présente une surface externe en liaison avec la surface radialement intérieure du sommet (S) de l'enveloppe pneumatique (10).

10. Dispositif d'évaluation (1) de la déformation d'une enveloppe pneumatique selon l'une des revendications précédentes dans lequel, le au moins un capteur de flexion (21) est un capteur passif et résistif.

11. Dispositif d'évaluation (1) de la déformation d'une enveloppe pneumatique selon l'une des revendications précédentes dans lequel, le au moins un capteur de flexion (21) est un capteur actif et piézoélectrique.

12. Dispositif d'évaluation (1) de la déformation d'une enveloppe pneumatique selon l'une des revendications précédentes dans lequel, le dispositif électronique (20) comprend au moins un capteur de mesure des paramètres de l'ensemble monté (28) compris dans le groupe comprenant capteur de température, capteur de pression et accéléromètre.

13. Dispositif d'évaluation (1) de la déformation d'une enveloppe pneumatique selon l'une des revendications précédentes dans lequel, le dispositif électronique (20) comprend au moins un dispositif émetteur radiofréquence (26).

14. Dispositif d'évaluation (1) de la déformation d'une enveloppe pneumatique selon l'une des revendications précédentes dans lequel, le dispositif électronique (20) comprend au moins dispositif récepteur radiofréquence (27).

## Patentansprüche

1. Vorrichtung zur Auswertung (1) der Verformung eines Reifenmantels, umfassend:
- einen Reifenmantel (10) mit einer Rotationsachse (11), der einen Scheitel (S) und zwei Flanken (F) umfasst, die in einer Befestigungszone (B) enden, und eine Radialsteifigkeit k_{radial} aufweist;
- wenn der Reifenmantel (10) in einer unter Nenn-Gebrauchsbedingungen montierten Einheit umfasst ist, die Aufstandsfläche des Reifenmantels (10) mit einer Abmessung L_{ade} in axialer Richtung;
- eine elektronische Vorrichtung (20) mit mindestens einem Biegesensor (21);
**dadurch gekennzeichnet, dass** der mindestens eine Biegesensor (21) einen aktiven Teil (22) umfasst, der eine Hauptabmessung zwischen 10 % und 80 % der Abmessung L_{ade} aufweist,
dass der aktive Teil (22) des Sensors sich rechtwinklig zum Scheitel (S) befindet,
dass die Hauptabmessung des aktiven Teils (22) in der Umfangsrichtung des Reifenmantels (10) ausgerichtet ist und dass der mindestens eine Biegesensor (21) eine weichere Biegesteifigkeit als die Radialsteifigkeit k_{radial} des Reifenmantels (10) aufweist.

2. Vorrichtung zur Auswertung (1) der Verformung eines Reifenmantels nach Anspruch 1, wobei der mindestens eine Biegesensor (21) empfindlich für Biegungen zwischen 0 und 60 Grad ist.

3. Vorrichtung zur Auswertung (1) der Verformung eines Reifenmantels nach einem der vorhergehenden Ansprüche, wobei die Aufstandsfläche des Reifenmantels (10), die in einer unter Nenn-Gebrauchsbedingungen montierten Einheit umfasst ist, eine Abmessung l_{adc} in Querrichtung aufweist, wobei die elektronische Vorrichtung (20) eine Messzone aufweist, die sich quer über eine Strecke zwischen 10 und 80 % der Abmessung l_{adc} erstreckt.

4. Vorrichtung zur Auswertung (1) der Verformung eines Reifenmantels nach einem der vorhergehenden Ansprüche, wobei der aktive Teil (22) des mindestens einen Biegesensors (21) in flächiger Form vorliegt, wobei die flächige Form in der Gruppe umfasst ist, die quadratisch, rechteckig, parallelogrammförmig, länglich, kreisförmig, oval und elliptisch umfasst.

5. Vorrichtung zur Auswertung (1) der Verformung eines Reifenmantels nach einem der vorhergehenden Ansprüche, wobei sich der aktive Teil (22) des mindestens einen Biegesensors (21) rechtwinklig zu einer Scheitelzone (S) des Reifenmantels (10) befindet, der hinsichtlich der Radialsteifigkeit homogen ist.

6. Vorrichtung zur Auswertung (1) der Verformung eines Reifenmantels nach einem der vorhergehenden Ansprüche, wobei sich der aktive Teil (22) des mindestens einen Biegesensors (1) rechtwinklig zu einem Profilelement einer Lauffläche (14) des Scheitels (S) des Reifenmantels (10) befindet.

7. Vorrichtung zur Auswertung (1) der Verformung eines Reifenmantels nach einem der vorhergehenden Ansprüche, wobei sich der aktive Teil (22) des mindestens einen Biegesensors (21) in Querrichtung des Scheitels (S) des Reifenmantels (10) zentriert ist.

8. Vorrichtung zur Auswertung (1) der Verformung eines Reifenmantels nach einem der vorhergehenden Ansprüche, wobei sich mindestens ein Teil der elektronischen Vorrichtung (20) radial innen am Scheitel (S) des Reifenmantels (10) befindet.

9. Vorrichtung zur Auswertung (1) der Verformung eines Reifenmantels nach einem der vorhergehenden Ansprüche, wobei der aktive Teil (22) des mindestens einen Biegesensors (21) eine äußere Oberfläche aufweist, die in Verbindung mit der radial inneren Oberfläche des Scheitels (S) des Reifenmantels (10) steht.

10. Vorrichtung zur Auswertung (1) der Verformung eines Reifenmantels nach einem der vorhergehenden Ansprüche, wobei der mindestens eine Biegesensor (21) ein passiver und resistiver Sensor ist.

11. Vorrichtung zur Auswertung (1) der Verformung eines Reifenmantels nach einem der vorhergehenden Ansprüche, wobei der mindestens eine Biegesensor (21) ein aktiver und piezoelektrischer Sensor ist.

12. Vorrichtung zur Auswertung (1) der Verformung eines Reifenmantels nach einem der vorhergehenden Ansprüche, wobei die elektronische Vorrichtung (20) mindestens einen Messsensor für Parameter der montierten Einheit (28) umfasst, der in der Gruppe umfasst ist, die einen Temperatursensor, Drucksensor und Beschleunigungssensor umfasst.

13. Vorrichtung zur Auswertung (1) der Verformung eines Reifenmantels nach einem der vorhergehenden Ansprüche, wobei die elektronische Vorrichtung (20) mindestens eine Hochfrequenz-Sendervorrichtung (26) umfasst.

14. Vorrichtung zur Auswertung (1) der Verformung eines Reifenmantels nach einem der vorhergehenden Ansprüche, wobei die elektronische Vorrichtung (20) mindestens eine Hochfrequenz-Empfängervorrichtung (27) umfasst.

## Claims

1. Device (1) for evaluating the deformation of a tyre casing which includes:
- a tyre casing (10) having a rotation axis (11), including a crown (S) and two sidewalls (F) ending with two grip zones (B), having a radial stiffness k_{radial};
- when said tyre casing (10) is included in a mounted assembly in a nominal condition of use, the footprint of said tyre casing (10) has a dimension L_{adc} in the axial direction;
- an electronic device (20) comprising at least one bending sensor (21); **in that** the at least one bending sensor (21) includes an active part (22) having a main dimension of between 10% and 80% of the dimension L_{adc}, **in that** the active part (22) of the sensor is located in line with the crown (S), **in that** the main dimension of the active part (22) is oriented in the circumferential direction of the tyre casing (10) ,and
- **characterized in that** the at least one bending sensor (21) has a bending stiffness that is lower than the radial stiffness k_{radial} of the tyre casing (10).

2. The device (1) for evaluating the deformation of a tyre casing as claimed in claim 1, wherein the at least one bending sensor (21) is sensitive to bending of between 0 and 60 degrees.

3. The device (1) for evaluating the deformation of a tyre casing as claimed in one of the preceding claims, wherein, with the footprint of said tyre casing (10) included in an mounted assembly under nominal conditions of use having a dimension l_{adc} in the transverse direction, the electronic device (20) has a measurement zone which extends transversally over a distance of between 10% and 80% of the dimension l_{adc}.

4. The device (1) for evaluating the deformation of a tyre casing as claimed in one of the preceding claims wherein, since the active part (22) of the at least one bending sensor (21) is in a surface shape, said surface shape is from the group including square, rectangular, parallelogram, oblong, circular, oval and elliptical.

5. The device (1) for evaluating the deformation of a tyre casing as claimed in one of the preceding claims, wherein the active part (22) of the at least one bending sensor (21) is located in line with a zone of the crown (S) of the radial stiffness material homogenous tyre casing (10).

6. The device (1) for evaluating the deformation of a tyre casing as claimed in one of the preceding claims, wherein the active part (22) of the at least one bending sensor (1) is located in line with a sculpture element of a tread (14) of the crown (S) of the tyre casing (10).

7. The device (1) for evaluating the deformation of a tyre casing, which device is mounted as claimed in one of the preceding claims, wherein the active part (22) of the at least one bending sensor (21) is centered transversally with respect to the crown (S) of the tyre casing (10).

8. The device (1) for evaluating the deformation of a tyre casing as claimed in one of the preceding claims, wherein at least part of the electronic device (20) is located radially inwardly with respect to the crown (S) of the tyre casing (10).

9. The device (1) for evaluating the deformation of a tyre casing as claimed in one of the preceding claims, wherein the active part (22) of the at least one bending sensor (21) has an external surface connected to the radially interior surface of the crown (S) of the tyre casing (10).

10. The device (1) for evaluating the deformation of a tyre casing as claimed in one of the preceding claims, wherein the at least one bending sensor (21) is a passive and resistive sensor.

11. The device (1) for evaluating the deformation of a tyre casing as claimed in one of the preceding claims, wherein the at least one bending sensor (21) is an active and piezoelectric sensor.

12. The device (1) for evaluating the deformation of a tyre casing as claimed in one of the preceding claims, wherein the electronic device (20) includes at least one sensor for measuring the parameters of the mounted assembly (28) from the group including a temperature sensor, a pressure sensor and an accelerometer.

13. The device (1) for evaluating the deformation of a tyre casing as claimed in one of the preceding claims, wherein the electronic device (20) includes at least one radiofrequency transmitting device (26).

14. The device (1) for evaluating the deformation of a tyre casing as claimed in one of the preceding claims, wherein the electronic device (20) includes at least one radiofrequency receiving device (27).
